**Europäisches Patentamt**

**European Patent Office**

**Office européen des brevets**

(19)

(11) Veröffentlichungsnummer: **0 059 847**
**B1**

(12) ## EUROPÄISCHE PATENTSCHRIFT

(45) Veröffentlichungstag der Patentschrift:
10.04.85

(51) Int. Cl.⁴: **B 23 Q 11/00**

(21) Anmeldenummer: **82100961.0**

(22) Anmeldetag: **10.02.82**

(54) **Waagerecht- Bohr- und Fräsvorrichtung mit einem an Führungen auf- und abwärts bewegten Spindelkasten.**

(30) Priorität: **10.03.81 DE 3108934**

(43) Veröffentlichungstag der Anmeldung:
**15.09.82 Patentblatt 82/37**

(45) Bekanntmachung des Hinweises auf die Patenterteilung:
**10.04.85 Patentblatt 85/15**

(84) Benannte Vertragsstaaten:
**BE CH FR GB LI SE**

(56) Entgegenhaltungen:
**DE - A - 2 147 985**
**DE - A - 2 328 404**
**DE - B - 1 261 730**
**DE - B - 1 602 736**
**DE - B - 2 742 642**

**VDI-ZEITSCHRIFT, Band 122, Nr. 7, April 1980, Seiten 267-272, Düsseldorf, DE. N. DIEKHANS et al.: "Massnahmen zur Verbesserung der geometrischen Genauigkeit bei Grosswerkzeugmaschinen"**

(73) Patentinhaber: **Scharmann GmbH & Co.,**
**Hugo-Junkers-Strasse 12-32,**
**D-4050 Mönchengladbach 2 (DE)**

(72) Erfinder: **Esser, Karl Josef, Ing.-grad., Pauenstrasse 89,**
**D-4050 Mönchengladbach 2 (DE)**

(74) Vertreter: **Wangemann, Horst, Dipl.-Ing.,**
**Stresemannstrasse 28, D-4000 Düsseldorf (DE)**

## Beschreibung

Die Erfindung bezieht sich auf eine Waagerecht-Bohr- und -Fräsvorrichtung der im Oberbegriff des Hauptanspruches genannten Art.

Durch die DE-A- 21 47 985 ist ein derartiges Waagerecht-Bohr- und -Fräswerk bekannt. Hierbei wird die Lage des Schwerpunktes des Gegengewichtes durch Verkürzung oder Verlängerung mindestens einer der Verbindungsketten zwischen dem Spindelkasten und dem Gegengewicht in oder annähernd in horizontaler Richtung verändert. – Bei dieser bekannten Vorrichtung ergibt sich eine strenge Linearität zwischen der Längsbewegung der Traghülse an dem Spindelkasten und dem Verkürzen oder Verlängern der einen Kette zwischen dem Spindelkasten und dem Gegengewicht dadurch, dass das mit dem Spindelkasten verbundene Ende der vorderen, d.h. der der Spindelkastenvorderseite zugekehrten Kette über ein mechanisches Übertragungssystem aus Wellen und Kegelrädern direkt durch die Antriebswelle oder -spindel der Traghülse verstellt wird.

Durch die DE-AS 27 42 642 ist ferner eine Anordnung zum Gewichtsausgleich eines an einem Röntgengerät bewegbaren Geräteteils bekannt, bei der der Ausgleich des Gewichtes der Kamera, des Verstärkers und des Zielgeräts, die an einem gemeinsamen Tragseil hängen, durch ein vorgespanntes Federsystem oder einen Stellmotor erfolgt, der durch ein die Dehnung des gemeinsamen Tragseils messende Vorrichtung, z.B. einen Dehnungsmessstreifen, gesteuert wird.

Durch die DE-AS 1 261 730 ist ferner eine Gewichtsausgleichsvorrichtung, insbesondere für den Spindelstock einer Bohr- und Fräsmaschine bekannt, bei der der Spindelstock, der in einem senkrecht geführten Schlitten horizontal verstellbar ist, über ein Seil mit einem lotrecht verschieblichen Gegengewicht verbunden ist, das über zwei Rollen geführt ist, die an einem dem oberen Ende des Maschinenständers um eine lotrechte Achse schwenkbaren Tragbalken angeordnet sind. Bei einer Horizontalbewegung des Spindelstocks in dem senkrecht geführten Schlitten vollführt der Tragbalken mittels eines Getriebes eine Schwenkbewegung, wobei der Spindelstock mit dem einen Seilende eine Horizontalbewegung in einer Richtung, das Gegengewicht mit dem zweiten Seilende eine gleiche Bewegung in der Gegenrichtung vollführen, so dass die Resultierende der Kräfte des Spindelstocks und des Gegengewichts stets durch die Achse des schwenkbaren Balkens geht. – Letztlich ist aus der DE-AS 1 602 736 eine Gegengewichtsaufhängung für Bohr- und Fräswerke mit einer ausfahrbaren Traghülse und Ausgleich der unterschiedlichen Dehnungen zweier durch ein Gegengewicht belasteter Zugstränge bekannt, die an ihrem dem Spindelstock benachbarten Ende mit den Enden eines Trägers verbunden sind, der in vertikaler Ebene seine Winkellage zur Horizontalen verändern kann, wobei der Träger sich an einer Rolle abstützt, die gleichzeitig mit der Traghülse durch einen Stelltrieb relativ zu dem Träger verschiebbar ist.

Der vorstehend genannte Stand der Technik berücksichtigt nur Vorrichtungen, bei denen ein dem Verstellweg der Kamera und des Zielgeräts bzw. der Bohrspindel oder Spindelstocks entsprechender linearer Gewichtsausgleich erfolgt.

Das mit einem Werkzeug bestückte vordere Ende der Traghülse einer Waagerecht-Bohr- und -Fräsvorrichtung beschreibt beim Ausfahren der Traghülse eine Verlagerungslinie, die einerseits durch Verformung der vertikalen Führungselemente des Spindelkastens infolge Schwerpunktsverlagerung durch Verschieben der Traghülse, andererseits von dem Werkzeug am vorderen Traghülsenende abhängig ist. Der Erfindung liegt daher die Aufgabe zugrunde, der exponentiellen Verlagerungslinie der Traghülse bzw. der von dem vorderen Traghülsenende mit seinem Werkzeug beschriebenen Kurve beim Längsverstellen der Traghülse zu entsprechen und die Abweichung dieser Linie bzw. Kurve von der Nullinie in Verlängerung der Traghülsenachse auszugleichen. Diese Forderung soll auch bei Bestückung der Traghülse mit unterschiedlichen Werkzeugen gewährleistet sein. Die hierbei zur Anwendung gelangenden Mittel sollen konstruktiv einfach und leicht zu betätigen sein.

Zur Lösung dieser Aufgabe sieht die Erfindung die Merkmale des kennzeichnenden Teils des Hauptanspruchs vor. – Die Merkmale der Unteransprüche dienen der Verbesserung und Weiterentwicklung der Merkmale des Hauptanspruches.

Als Vorteil der erfindungsgemässen Vorrichtung zeigt sich, dass das Gegengewicht weitgehend schwingungsfrei in seiner Führung gehalten ist, da sein Schwerpunkt keine seitliche Verlagerung erfährt. – Es erfolgt ein schneller und exakter Ausgleich der u.a. auch dem Gewicht des einzusetzenden Werkzeuges Rechnung tragenden Abweichung von der Nullinie, d.h. von der Traghülsenlängsachse. – Es bedarf während des Traghülsenvorschubs nur des Eingebens der Vorschubwerte der Traghülse über Weganzeiger in die Kompensationsvorrichtung, die dann unmittelbar danach die entsprechenden Impulse zum Bewegen der verstellbaren Rolle über einen Drehanzeiger als Abgleich an einen Drehmotor abgibt. – Als ein solcher kann ein relativ hochtouriger Drehmotor verwandt werden, wobei ein Zwischengetriebe die hochtourige Drehbewegung des Motors in eine feinfühlige kleine und genaue Längsverstellung der Achse der verstellbaren Umlenkrolle verwandelt.

Auf der Zeichnung ist ein Ausführungsbeispiel der erfindungsgemässen Vorrichtung dargestellt, und zwar zeigt

Figur 1 die Waagerecht-Bohr- und -Fräsvorrichtung in Seitenansicht,

Figur 2 den Antrieb der verstellbaren Umlenkrolle und

Figur 3 die Darstellung der Nullinie, d.h. der waagerechten Traghülsenmittelachse und exponentielle Verlagerungslinien, auf denen sich das vordere Ende der Traghülse mit verschiedenen eingesteckten Werkzeugen beim Ausfahren der Traghülse aus dem Spindelkasten ohne die erfindungsgemässe Ausgestaltung bewegen würde.

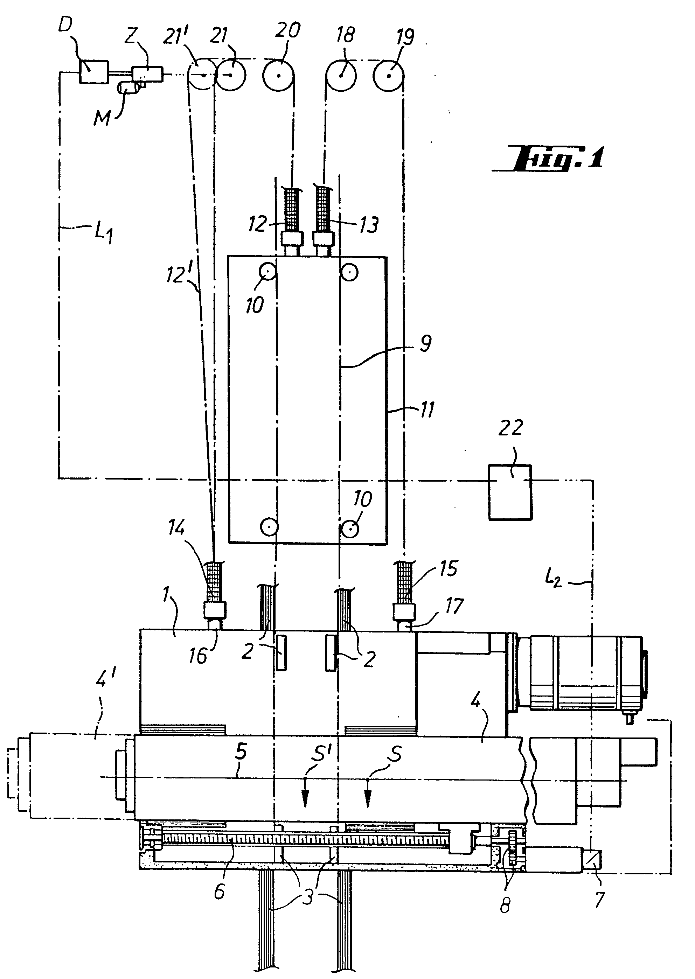

Der Spindelkasten 1 ist durch Führungselemente 2 und 3 senkrecht an der Horizontal-Bohr- und -Fräsvorrichtung geführt. In ihm ist die Traghülse 4, deren Längsmittelachse mit 5 bezeichnet ist, aus einer Stellung in ausgezogener Linie in Figur 1 z.B. in eine Stellung 4' ausfahrbar. Zum Verstellen der Traghülse innerhalb des Spindelkastens 1 kann eine geeignete Welle oder Spindel 6 dienen. – Mit der Längsverstellung der Traghülse 4 in ihre Stellung 4' ändert sich auch die Lage des Schwerpunktes S des Spindelkastens samt Traghülse in eine Stellung S'.

Durch die Welle oder Spindel 6 oder in anderer Weise wird die Längsbewegung der Traghülse 4 erfasst und auf einen Weganzeiger 7 gegeben. Im dargestellten Beispiel kann beispielsweise über das Vorgelege 8 der Weganzeiger beaufschlagt werden, der entsprechend der jeweiligen Längsstellung der Traghülse 4 Impulse in unten noch näher beschriebener Weise abgibt.

An einer Führung 9 ist mittels der Elemente 10 ein Gegengewicht 11 in senkrechter Richtung geführt. An dem Gegengewicht greifen die vordere Kette 12 und eine hintere Kette 13 an. Diese sind mit ihrem zweiten Ende 14, 15 an oder in Nähe der Vorderseite bei 16 und in der Mitte oder in Nähe der Rückseite des Spindelkastens 1 bis 17 unnachgiebig befestigt.

Statt der in Figur 1 gezeigten zwei Ketten 12, 13 kann auch jeweils ein vorderes und ein hinteres Kettenpaar Anwendung finden. Der Einfachheit halber ist hier nur von einer vorderen und einer hinteren Kette die Rede.

Die hintere Kette 13 ist um zwei, in horizontaler Ebene nebeneinander angeordnete Umlenkrollen 18, 19 geführt, die beide feststehen. Die vordere Kette hingegen ist um eine feststehende Umlenkrolle 20 und eine, in horizontaler Ebene auf gleicher Höhe mit der Rolle 20 verstellbare Umlenkrolle 21 geführt. Diese kann beispielsweise in die Stellung 21' verstellt werden, wobei dann die Kette 12 die Stellung 12' einnehmen würde.

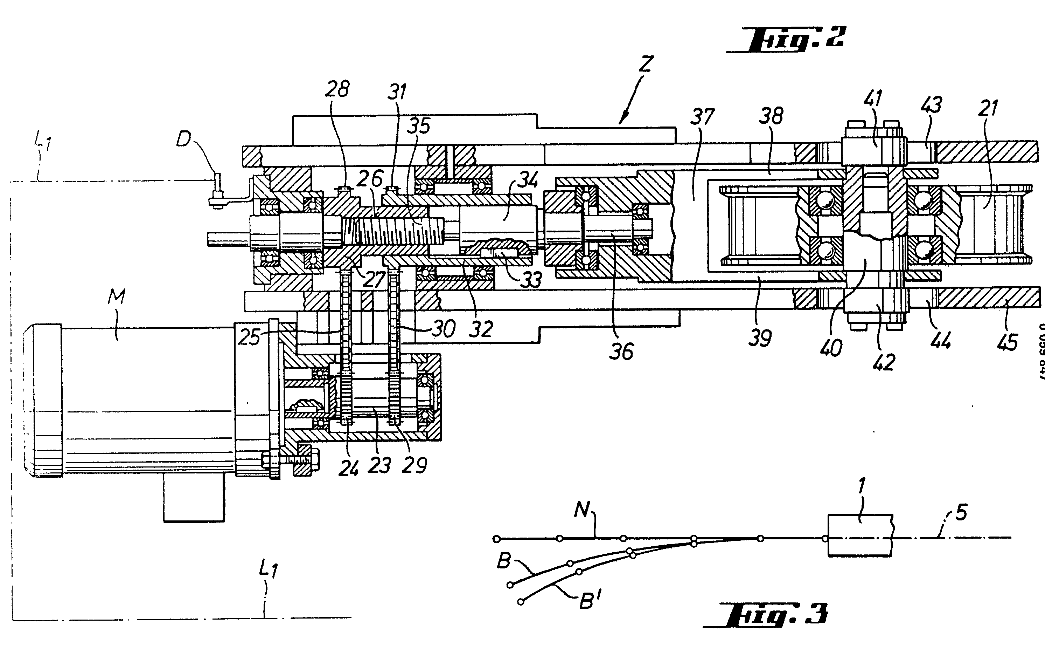

Die Umlenkrolle 21 wird über ein Zwischengetriebe Z (vgl. auch Figur 2) durch einen Drehmotor M mit relativ hoher Drehzahl angetrieben. Der Drehanzeiger D nach Figuren 1 und 2 ist über eine Steuerleitung $L_1$ mit einer Kompensationsvorrichtung 22 verbunden, die ihrerseits über eine Leitung $L_2$ mit dem Weganzeiger 7 verbunden ist.

Beim Ausfahren der Traghülse 4 bewegt sich das vordere mit einem Werkzeug bestückte Ende der Traghülse nicht auf der Nullinie N in Verlängerung der Längsmittelachse der Traghülse (Figur 3), vielmehr auf einer Kurve B, die eine Funktion der elastischen Verformung der vertikalen Führungselemente des Spindelkastens, des Aufbaus der Traghülse, der Lagerung, der Ausfahrlänge und des Gewichtes der am vorderen Ende der Traghülse angeordneten Werkzeuges ist. So kann die Verlagerungslinie auch die Form B' in Figur 3 annehmen und jede beliebige Zwischenform zwischen der Nullinie N und der Verlagerungslinie B', beispielsweise bei Änderung des Werkzeuges, erhalten.

In die Kompensationsvorrichtung 22, die eine Speicher- und Rechenvorrichtung ist, werden die Koordinaten der entsprechenden Verlagerungslinien B, B' usw. für die einzelnen Werkzeuge eingegeben und mit der durch den Weganzeiger 7 mitgeteilten jeweiligen Stellung der Traghülse momentan verrechnet. Über die Steuerleitungen $L_1$, $L_2$ und die Kompensationseinrichtung 22 erfolgt ein ständiger Abgleich zwischen dem Weganzeiger 7 und dem Drehanzeiger D, wobei der Motor sich beschleunigt oder verzögert dreht, so dass die Bewegung des Motors streng dem Verlauf der Verlagerungslinie B Rechnung trägt und die Umlenkrolle 21 entsprechend horizontal verstellt wird.

Das Eingeben der Verlagerungslinien-Werte in die Kompensationseinrichtung 22 kann entweder aufgrund früher ermittelter Verlagerungslinien-Werte erfolgen oder aber die Traghülse wird in einem Leervorschub mit dem Werkzeug verfahren und die Werte in Verbindung mit den Werten des Signalgebers 7 in die Kompensationsvorrichtung eingegeben, wonach nach dem Rückfahren und neuerlichem Vorfahren der Traghülse nunmehr die für die Kompensation der Verlagerungslinie erforderlichen Impulse über die Leitungen $L_1$ an den Drehanzeiger D vorgegeben werden und hierdurch der Motorabgleich erfolgen kann.

Um ein genaues Verstellen der Umlenkrolle 21 zu erreichen und hierbei einen relativ schnelllaufenden Drehmotor M anwenden zu können, ist auf der Antriebswelle 23 des Motors M ein erstes Kettenrad 24 drehfest aufgebracht, das über eine Antriebskette 25 eine mit einem Innengewinde 26 versehene drehbare, jedoch gegen Längsverstellung gesicherte Mutter 27 über deren Kettenradteil 28 antreibt. – Auf der Antriebswelle 23 ist ferner ein zweites Kettenrad 29 drehfest aufgebracht, das über eine Kette 30 den Zahnteil 31 einer Büchse 32 in Drehung versetzt. In dieser Büchse ist über Nut und Feder 33 ein zylindrischer Führungsteil 34 drehfest, dieser gegenüber jedoch längsverschieblich angeordnet. Dieser zylindrische Führungsteil trägt eine Gewindespindel 35, die in das Innengewinde 26 der Mutter 27 eingreift, so dass bei deren Drehen die Gewindespindel 35 und der damit verbundene zylindrische Führungsteil 34 eine Längsverstellung erfahren können. Die Büchse 32 ist wie die Mutter 27 gegen Längsverstellung gesichert.

Die beiden Kettenräder 24, 29 bzw. Radteile 28, 31 mit ihren Ketten 25, 30 besitzen ein kleines unterschiedliches Übersetzungsverhältnis derart, dass bei Drehen der Antriebswelle 23 die Büchse 32 mit dem zylindrischen Teil 34 und der Spindel 35 eine relativ Drehbewegung gegenüber der Mutter 27 ausführen, aufgrund welcher die Längsverstellung des Teiles 34 in der einen oder anderen Längsrichtung erfolgt, mit dem über einen Zapfen 36 eine Gabel 37 verstellbar ist, deren beiden Gabelteile 38, 39 die Achse 40 der Umlenkrolle 21 zu deren beiden Seiten umfassen. Die Achsenden 41, 42 sind in je einem horizontalen Langloch 43, 44 eines Rahmens 45 geführt.

**0 059 847**

**Patentansprüche**

1. Waagerecht-Bohr- und -Fräsvorrichtung mit einem an Führungen auf- und abwärtsbewegten Spindelkasten (1) mit einer an diesem horizontal verstellbaren Traghülse (4) sowie mit einem mit dem Spindelkasten über mindestens zwei senkrechte oder annähernd senkrechte, über Umlenkrollen geführte Ketten (12, 13) verbundene Gegengewicht (11), dadurch gekennzeichnet, dass das Gegengewicht (11) senkrecht geführt ist und dass eine (21) der Umlenkrollen (18 bis 21) der Ketten (12, 13) in Abhängigkeit von der exponentiellen Verlagerungslinie (B) der Spindelachse gegenüber der Nullinie (N) beim Herausfahren der Traghülse (4) radial verstellbar ist.

2. Vorrichtung nach Anspruch 1, dadurch gekennzeichnet, dass die verstellbare Umlenkrolle (21) in Richtung der Ausfahrbewegung der Traghülse (4) horizontal verstellbar ist.

3. Vorrichtung nach Anspruch 1, bei der jede der Ketten über ein vorderes und ein hinteres Umlenkrollenpaar geführt ist, dadurch gekennzeichnet, dass die vordere Rolle (21) des vorderen Umlenkrollenpaares (20, 21) verstellbar ist.

4. Vorrichtung nach Anspruch 1, dadurch gekennzeichnet, dass die Traghülse (4) bzw. der Spindelkasten (1) eine die Längsbewegung der Traghülse am Spindelkasten erfassende oder abtastende, impulsgebende Einrichtung (Weganzeiger 7) aufweist.

5. Vorrichtung nach Anspruch 4, dadurch gekennzeichnet, dass die impulsgebende Einrichtung (Weganzeiger 7) mit einer zwischen sich und einem Drehanzeiger (D) für die Regelung des Drehmotors (M) der verstellbaren Umlenkrolle (21) geschalteten, die Koordinaten der Verlagerungslinie (B) beim Herausfahren der Traghülse (4) aufnehmende und speichernde Kompensationsvorrichtung (22) verbunden ist.

6. Vorrichtung nach Anspruch 1 und einem oder mehreren der Ansprüche 2 bis 5, dadurch gekennzeichnet, dass die Achse (40) der verstellbaren Umlenkrolle (21) in horizontalen Langlöchern (43, 44) geführt und durch eine längsbewegbare Gabel (37) über ein Zwischengetriebe (Z) von dem Drehmotor (M) verstellbar ist.

7. Vorrichtung nach Anspruch 6, dadurch gekennzeichnet, dass das Zwischengetriebe (Z) ein Übersetzungsgetriebe ist mit einer von dem Motor (M) angetriebenen Innengewindemutter (27), mit einer ebenfalls längsunbeweglichen, von dem Motor (M) mit von der Drehzahl der Gewindemutter (27) unterschiedlicher Drehzahl angetriebenen Büchse (32) und einer mit der Büchse (32) drehfest und durch Eingriff in das Innengewinde (26) der Gewindemutter (27) längsverstellbaren Gewindespindel (35).

**Claims**

1. A horizontal drilling and milling device with a headstock (1) moved upwards and downwards on guides, with a supporting sleeve (4) able to be vertically moved on the headstock, and with a counter-weight (11) joined with the headstock by way of at least two upright or substantially upright chains (12 and 13) running over pulleys, characterized in that the counter-weight (11) is vertically guided and that one (21) of the pulleys (18 to 21) for the chains (12 and 13) is radially adjustable following an exponential line (B) of displacement of the spindle shaft in relation to the datum line (N) on moving the supporting sleeve (4) outwards.

2. The device as claimed in claim 1 characterized in that the adjustable pulley (21) is horizontally adjustable in the direction of the outward motion of the support sleeve (4).

3. The device as claimed in claim 1 in which each of the chains runs over a front and a back pair of pulleys, characterized in that the front pulley (21) of the front pair (20 and 21) of pulleys is adjustable.

4. The device as claimed in claim 1 characterized in that the supporting sleeve (4) or the headstock (1) has a pulse generating pick-up (displacement indicator 7) sensing the lengthways motion of the supporting sleeve on the headstock.

5. The device as claimed in claim 4 characterized in that the pulse generating pick-up (displacement indicator 7) is joined to a compensation means (22) placed between it and a rotation indicator (D) for the control of the turning motor (M) of the adjustable pulley (21), said compensation means (22) sensing and storing the coordinates of the extension line (B) when the supporting sleeve (4) is moved outwards.

6. The device as claimed in claim 1 and any one or more of the claims 2 to 5, characterized in that the bearing pin (40) of the adjustable pulley (21) is guided in horizontal slots (43 and 44) and is moved by way of a fork (37) moving in the length direction, an intermediate drive (Z) and the turning motor (M).

7. The device as claimed in claim 6 characterized in that the intermediate drive (Z) is a change-speed drive with a nut (27) driven by the motor (M), with a bush (32) also incapable of moving in the length direction, driven by the motor (M) at a speed differing from the speed of the nut (27) by the motor (M) and a threaded rod (35), able to be moved in the length direction by engagement with the female thread (26) of the nut (27), said rod (35) being locked with the bush (32) for the transmission of rotation therebetween.

**Revendications**

1. Machine de perçage et de fraisage horizontale comportant une boîte à broches (1) montant et descendant le long de guides, avec une douille de support (4) déplaçable sur celle-ci horizontalement ainsi qu'un contrepoids (11) relié à la boîte à broches par au moins deux chaînes (12, 13) disposées verticalement ou à peu près verticalement et guidées sur des galets de renvoi, caractérisée en ce que le contrepoids (11) est guidé verticalement et en ce qu'un galet (21) des galets de renvoi (18 à 21) des chaînes (12, 13) est déplaçable radialement en fonction de la ligne de transfert exponen-

tielle (B) de l'axe de la broche par rapport à la ligne de référence (N) lors du déplacement de la douille de support (4).

2. Machine selon la revendication 1, caractérisée en ce que le galet de renvoi mobile (21) est déplaçable horizontalement en direction du mouvement de sortie de la douille de support (4).

3. Machine selon la revendication 1, dans laquelle chacune des chaînes est guidée sur une paire de galets de renvoi antérieurs et une paire de galets de renvoi postérieurs, caractérisée en ce que le galet antérieur (21) de la paire de galets antérieurs (20, 21) est mobile.

4. Machine suivant la revendication 1, caractérisée en ce que la douille de support (4), respectivement la boîte à broches (1) présente un appareil générateur d'impulsions (indicateur de course 7) enregistrant ou explorant de déplacement longitudinal de la douille de support sur la boîte à broches.

5. Machine selon la revendication 4, caractérisée en ce que l'appareil générateur d'impulsions (indicateur de course 7) est relié à un dispositif de compensation (22) monté entre ledit appareil et un indicateur de rotation (D) pour le réglage du moteur triphasé (M) du galet de renvoi mobile (21), relevant et mettant en mémoire les coordonnées de la ligne de transfert (B) lors du déplacement de la douille de support (4).

6. Machine selon la revendication 1 et une ou plusieurs des revendications 2 à 5, caractérisé en ce que l'axe (40) du galet de renvoi mobile (21) est guidé dans des trous longitudinaux (43, 44) et est mobile dans une fourche (37) déplaçable longitudinalement par une transmission intermédiaire (Z) du moteur triphasé (M).

7. Machine selon la revendication 6, caractérisée en ce que la transmission intermédiaire (Z) est un mécanisme de transmission avec un écrou à filet interne (27) commandé par le moteur (M), un manchon (32) également fixe longitudinalement commandé par le moteur (M) avec un nombre de tours indépendant du nombre de tours de l'écrou fileté (27) et une broche filetée (35) fixe en rotation avec le manchon (32) et déplaçable longitudinalement par engrènement dans le filet interne (26) de l'écrou fileté (27).

Fig.1

0 059 847

7

Fig. 2

Fig. 3

0 059 847